# EUROPEAN PATENT SPECIFICATION

(11) **EP 3 445 608 B1**
(45) Date of publication and mention of the grant of the patent: **12.02.2020**
(21) Application number: 17801496.5
(22) Date of filing: 22.09.2017
(51) Int. Cl.: B60P 1/16, B60P 1/28

(54) **SYSTEM FOR CONTROLLED TIPPING OF A DUMP BODY IN A TRANSPORT VEHICLE**
SYSTEM ZUM GESTEUERTEN KIPPEN EINER KIPPMULDE BEI EINEM TRANSPORTFAHRZEUG
SYSTÈME DE BASCULEMENT COMMANDÉ D'UN CORPS DE BENNE DANS UN VÉHICULE DE TRANSPORT

(30) Priority: 22.09.2016 IT 201600095048
(43) Date of publication of application: 27.02.2019
(73) Proprietor: Italauto Car - Societa' A Responsabilita' Limitata, 41015 Nonantola (MO) (IT)
(72) Inventor: MESCHIARI, Andrea, 41015 Nonantola (MO) (IT)
(74) Representative: Maroscia, Antonio
(86) International application number: PCT/IB2017/055765
(87) International publication number: WO 2018/055565

(56) References cited:
- EP-A1- 0 481 114
- EP-A1- 1 717 101
- WO-A1-2012/004751
- FR-E- 79 480
- US-A- 1 993 203

## Description

### Field of the invention

The present invention relates to a system for controlled tipping of a dump body of a transport vehicle, such as the dump body of a truck as disclosed in EP 1717101 A1.

### Background art

Load-carrying bodies of transport vehicles, such as truck bodies, rest on the chassis at least at four support locations, substantially at the vertices of the bottom face of the load-carrying floors of the bodies.

Each support location has two mutually engageable support and elements, namely a convex element which is fixed to the frame by a horizontal shank and extends therefrom in cantilever fashion thereby forming a spherical head supported by the shank, and a substantially inverted cup-shaped concave element, which is fixed to the bottom surface of the floor of the body and is designed to accommodate the spherical head by receiving it therein for complete support.

The concave element has a slightly flared inlet opening for easy introduction of the spherical head therein and a straight longitudinal notch formed in the outer surface of the inverted cup for passage of the shank during introduction and removal into and from the spherical head.

Both the spherical head and the inverted cup have respective through holes, which are mutually aligned when the body is in its normal horizontal position, for receiving respective locking bolts that prevent separation thereof.

When the body has to be tipped for payload dumping, the driver may select the lateral side or the back side through which the material has to be dumped, and may operate in either of two different ways.

In a first way, the driver operates manually, i.e. comes out of the driver's cab and manually removes the bolts on the side of the body that has to be released to be lifted.

The driver must also release the hooks, if any, that are typically provided between the dump floor of the body and the bases of its walls, to hold the latter in the vertical payload-retaining position.

When the driver has completed both of these steps, he/she will come back to the driver's cab and actuate the hydraulic lift cylinder, which is located below the center of the frame of the vehicle.

This will cause the body to progressively lift and pivot toward the predetermined side, i.e. about the bolts that are still held between their respective spherical heads and the corresponding inverted cups, which act as rotation fulcrums.

In the manual way of operation, arrangements have been provided to avoid any wrong insertion or removal of the bolts, such as at crossing support locations relative to the longitudinal axis of the body.

MO2010A000033, by the applicant hereof, discloses a tipping system that provides automatic bolt insertion/removal using respective electric actuators connected to a control unit that moves them between the engaged and disengaged positions.

As the bolts reach their positions, typically their disengaged positions on one side of the body, a signal is generated, which is sent to a receiving device disposed in the driver's cab and enables the driver to start tipping the body toward the selected side, opposite to the side in which the bolts are engaged.

In this step, care must be taken for the bolts to be fail-safely inserted and the hooks to be released from the walls on the same selected side of the body to prevent any risk of dumping the payload on the wrong side, and also causing safety hazards for the operators that may be unaware of a bolt selection error and stand near the side of the body on which the payload will be dumped.

If the body has walls, these must be able to be opened on the dumping side, otherwise the payload would be displaced, during tipping, and progressively build up against the walls that have been wrongly left closed, thereby applying an increasing thrust thereupon, and possibly cause failure.

A first drawback of this arrangement is that the bolts slide out of the chassis frame and, in the operating position, tend to be exposed to shocks or damage.

A further drawback is that the electrical connections of the actuators with the control unit are at least partially arranged on the vehicle body.

This drawback adds complexity to the steps for removing the body from the chassis of the vehicle for replacement or maintenance and may cause damage to such connections.

A further drawback is that, in the locked body position, the bolts extend through the spherical body and beyond to a short length which substantially corresponds to the thickness of the walls of the bell elements in which the holes have been formed.

This results in a weak locked state, which is only obtained by contact and engagement of short lengths of the ends of the bolts and the thickness of the holes formed in the thickness of the inverted bell elements.

### Technical Problem

In view of the prior art, the technical problem addressed by the present invention consists in providing a system that affords automatic and safe tipping of the dump body of a vehicle and is very simple.

### Disclosure of the invention

The object of the present invention is to obviate the above drawback, by providing a system for controlled tipping of a dump body of a vehicle.

Another object of the present invention is to provide a system as described above that affords automatic and safe tipping of the dump body of a vehicle.

A further object of the present invention is to provide a system as described above that can prevent damages to mechanical and electronic parts.

Another object of the present invention is to provide a system as described above that has lower complexity and a smaller size.

Yet another object of the present invention is to provide a system as described above that affords simpler disassembly and removal of the dump body.

Another object of the present invention is to provide a system as described above that provides stable support to the dump body of the vehicle as it moves.

These and other objects, as more clearly explained hereafter, are fulfilled by a system for controlled tipping of a dump body of a transport vehicle as defined in claim 1.

Advantageous embodiments of the invention are obtained in accordance with the dependent claims.

### Brief description of the drawings

Further features and advantages of the invention will be more apparent from the detailed description of a preferred, non-exclusive embodiment of a system for controlled tipping of a dump body of a vehicle, which is described as a non-limiting example with the help of the annexed drawings, in which:
FIG. 1A is a schematic rear view of a transport vehicle, namely a truck with a total or selective body-locking system, according to a prior art arrangement;
FIG. 1B is a schematic rear view of a transport vehicle, namely a truck with a tipping system of the invention;
FIG. 2 is a schematic top view of the truck of Fig. 1B, having a unit for controlling the tipping system;
FIG. 3 is a schematic top view of the subframe of a vehicle comprising the control unit and the electrical connections;
FIG. 4 is a perspective view of a total or selective body-locking device for a transport vehicle in a locked configuration, and demounted from the vehicle;
FIG. 5 is a side view of the locking device of Fig. 4;
FIG. 6 is a longitudinal sectional view of the locking device of Fig. 5, as taken along a plane IV-IV;
FIG. 7 is a schematic longitudinal sectional view of the locking device of Fig. 6, in which a spherical head is coupled in a lateral tipping position of the body;
FIG. 8 is a schematic lateral view of the locking device of Fig. 7 in which a spherical head is coupled in a rear tipping position of the body;
FIG. 9 is a schematic side view of the device of Fig. 7 in which a spherical head is coupled in a loading position of the body;
FIG. 10 is a front view of the device of Fig. 9.

### Detailed description of a preferred exemplary embodiment

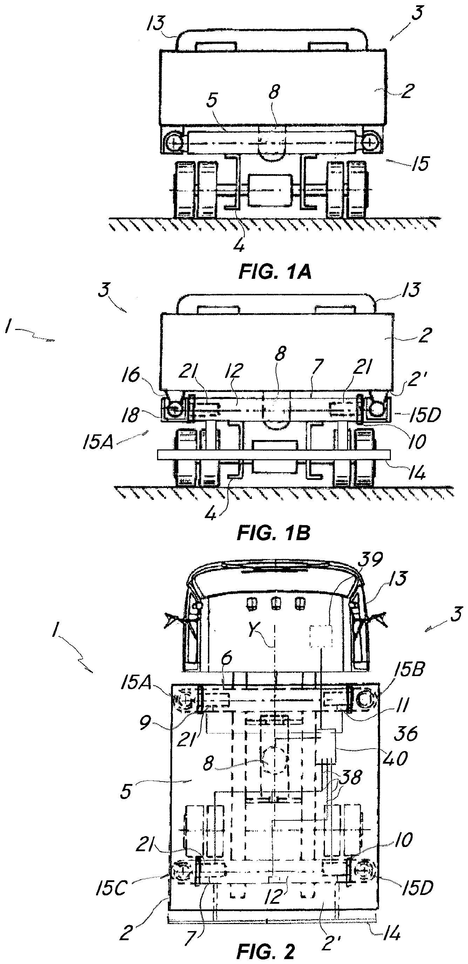

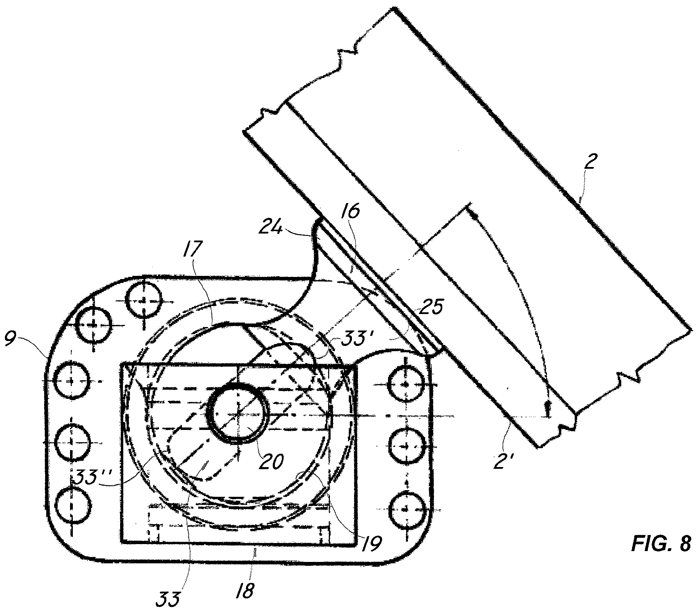

Particularly referring to Figures 1B to 9, there is shown a system, generally designated by numeral 1, for controlled tipping of a dump body 2 of a transport vehicle 3, e.g. a truck.

FIG. 1A shows the rear portion of a vehicle 3 with a total or selective locking device for the body 2, in a prior art arrangement, i.e. with kinematically reversed locking means with respect to the inventive subject.

The system 1 of the present invention is shown in FIG. 1B, in which the same reference numerals designate the parts in common with FIG. 1, and in which the rear side of a vehicle 3 is also shown.

As is known per se, the vehicle 3 comprises a support frame 4, a counter frame 5 which is removably mounted to the frame 4 and has at least two parallel cross members 6, 7, one at the front and one at the rear, and a hydraulic lift cylinder 8 for lifting the body 2.

Advantageously, the cross members 6, 7 may be supported by respective pairs of transverse flanges 9, 10 and may comprise respective recesses 11, 12, as best shown in FIGS. 1B and 2.

Also, a driver's cab 13 is provided for the driver of the vehicle 3, at the front of the body 2 and a rear underrun protection bar 14 mounted to the frame 4 in swinging fashion.

Particularly, the underrun protection bar 14 is configured to move from a retracted and lifted rest position, also known as "work position" and an extended and lowered operating position, also known as "drive position" and vice versa.

Furthermore, the system 1 has a selective locking device 15 for the body 2, comprising support means 15A, 15B, 15C, 15D therefor, which are designed to be selectively locked and placed at the ends of the cross members 6, 7.

In the embodiment as shown in the figures, the locking device 15 comprises four support means 15A, 15B, 15C, 15D, which are arranged substantially at the four vertices of the body 2.

The two support means 15A and 15B face the front of the vehicle 3, proximate to the driver's cab 13, and the two support means 15C and 15D are located at the rear.

In other words, the two support means 15A and 15C are to the left of a viewer with respect to a longitudinal center axis Y of the vehicle 3, whereas the two support means 15B and 15D are to the right of such axis Y.

Each of the support means 15A, 15B, 15C, 15D comprises a convex element 16 with a spherical head 17 and a concave element 18 having a seat 19 for receiving the spherical head 17. The convex element 16 and the concave element 18 of the support means 15A, 15B, 15C, 15D are equal and will be designated by the same reference numerals.

The seat 19 is shaped to mate the head 17 and may have a hemispherical shape, designed to receive the spherical head 17 therein, when the body 2 is in the normal horizontal transport position or the vehicle 3 is driven on the road.

In addition, each support means 15A, 15B, 15C, 15D comprises a pin 20 for selectively locking each concave element 19 and each convex element 16 together to prevent separation thereof and a double-acting actuator 21 for imparting a two-way motion to the pin 20.

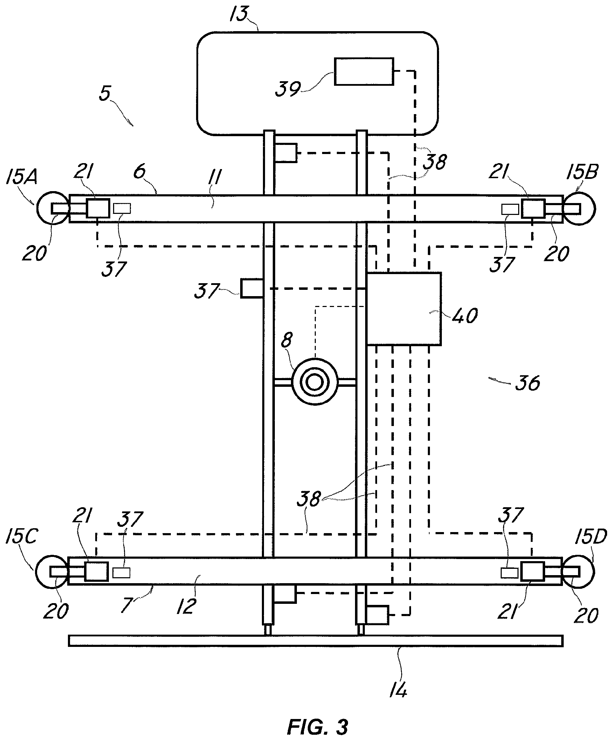

Advantageously, as best shown in FIGS. 3 to 9, each actuator 21 may comprise a stem 22 which is coaxially fixed in an adjustable manner to a respective pin 20 for imparting the two-way motion to the latter.

Particularly, a coaxial coupling 23, typically of the male-female screw type, is provided between the pin 20 and the stem 22, allowing adjustment of the overall length of the assembly of the pin 20 and the stem 22, by loosening or tightening them relative to each other.

The actuator 21 may alternatively be of pneumatic, electric, hydraulic type, without departure from the scope of the present invention.

According to a peculiar aspect of the invention, each convex element 16 is fixed to a bottom face 2' of the body 2 and each concave element 18 is secured to the counter frame 5 in alignment with a respective convex element 16.

Moreover, each actuator 21 is accommodated in a recess 11, 12 of a cross member 6, 7 at a respective support means 15A, 15B, 15C, 15D for actuating the respective pin 20 along a transverse direction X and cause the convex element 16 and of the concave element 18 to be locked together when the body 2 does not have to be tipped.

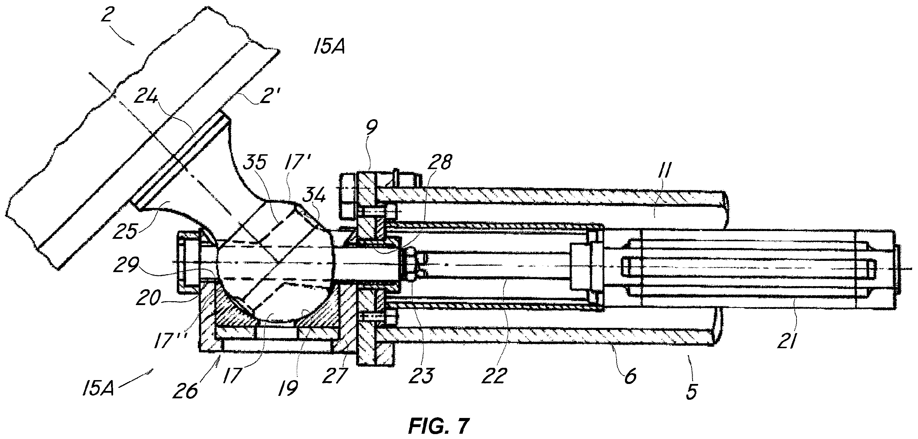

As shown in FIGS. 7 to 10, each convex element 16 comprises a securing base 24 for fixation to the bottom face 2' of the body 2 and a connecting segment 25 between the base 24 and the spherical head 17.

Furthermore, the concave element 18 may comprise a mating cup-shaped body 26, which defines the seat 18 for the spherical head 17 and has a side portion 27 for fixation to the counter frame 5, particularly to the support flanges 9, 10 of the cross members 6, 7.

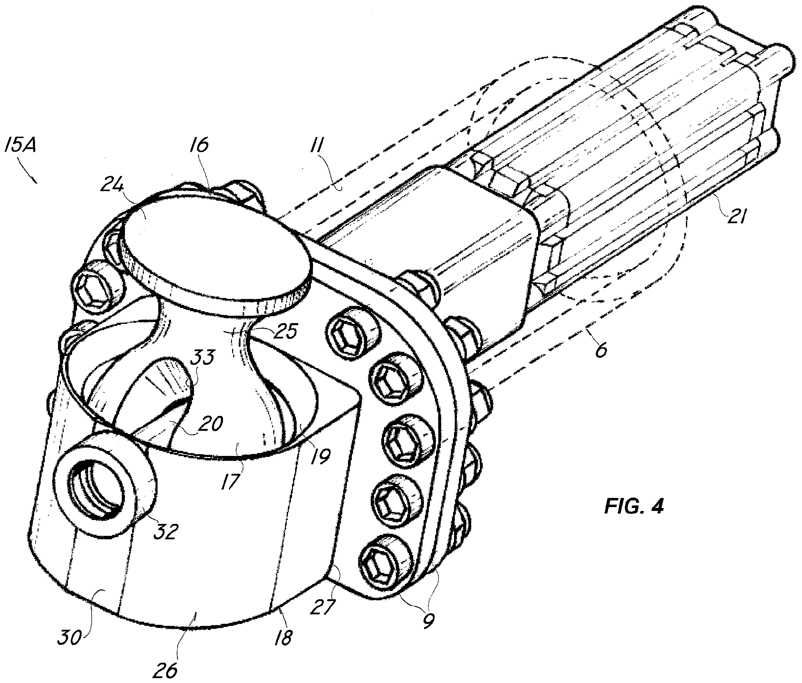

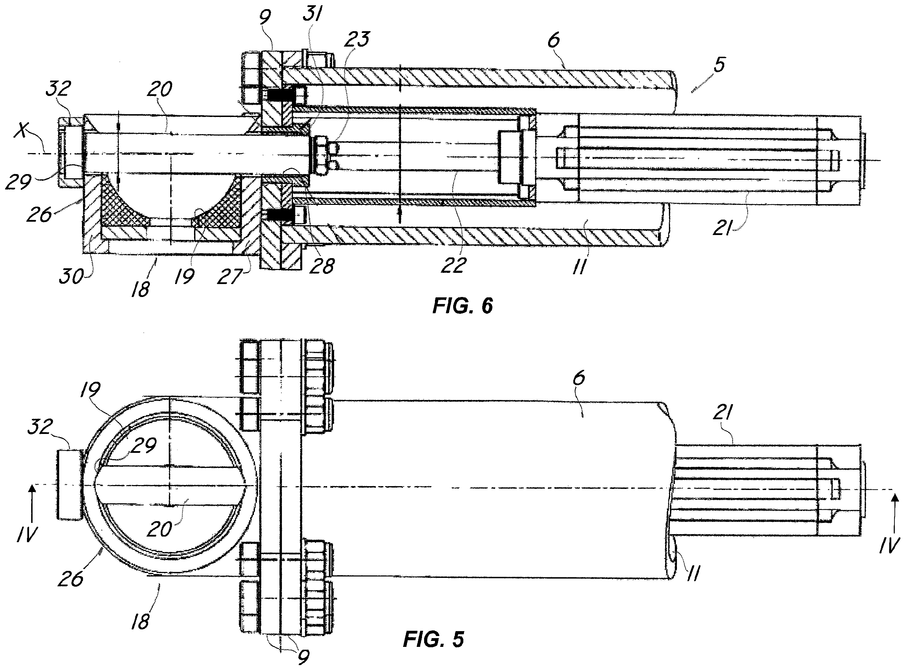

Each pin 20 and each stem 22 have such overall lengths as to allow the pin 20 to extend along the entire seat 19, as shown in FIGS. 4 and 5, by fitting into a first through hole 28 formed both in the flanges 9, 10 and in the side portion 27 of the cup-shaped body 26 and extending to engagement of an opposed second hole 29 coaxial with the first hole 28 and formed in the wall 30 opposite to the flange 9, 10 of the cup-shaped body 26.

A first antifriction and sealing bush is fitted into the first hole 28, to facilitate a guided sliding motion of the pin 20 while preventing any infiltration of debris and dust into the receptacle 19.

In a possible embodiment of the cup-shaped body 26, as shown in FIGS. 4 to 7, it will be appreciated that a second axially hollow cylindrical bush 32 is fixed on the wall in the coaxial extension of the second hole 29, and if needed, can reach the end of the pin 20 when the latter engages the hole 29 to push or pull it as needed.

Advantageously, each spherical head 17 of each convex element 16 may comprise a pair of diametrically opposite slots 33, 34, which are connected together by a hole 35 for the passage of the respective pin 20.

One of the eyelets 33 is formed on the outer surface portion 17' of the spherical head 17 opposite to the flanges 9, 10, whereas the other eyelet34 is formed on the outer surface portion 17" of the spherical head 17 that faces the flanges 9, 10.

The two eyelets33, 34 are substantially identical, but extend in opposite directions from the center of the spherical head 17, and namely the one that faces away from the flanges 9, 10 extends toward the securing base 24 and the other, that faces toward the flanges 9, 10, extends in a vertically opposite direction.

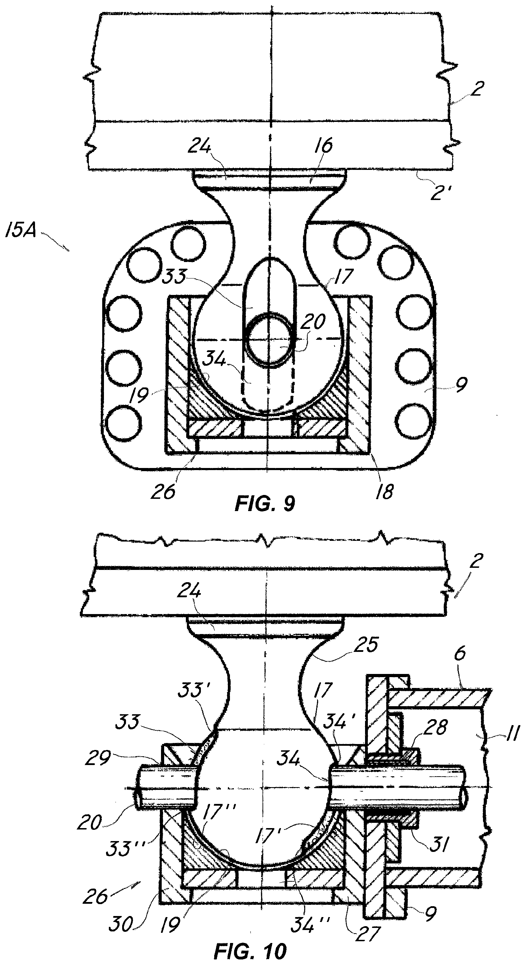

These eyelets33, 34 have their respective ends 33', 34' transversely engaged by the pin 20 when the body 2 is in a horizontal configuration, as shown in FIG. 10.

When the body 2 is tipped to one side, the eyelets33, 34 slide on the pin 20 until the latter engages the opposite end 33", 34" of the eyelets33, 34.

Conversely, the eyelets33, 34 of the spherical heads 17 of one side of the body 2 are disengaged from the pin 20 when the body 2 has to be tipped to the opposite side, to allow the spherical heads 17 to freely come out of the respective bodies 26 on the same side of the body 2.

The four support means 15A, 15B, 15C, 15D are formed as described above and their respective eyelets33, 34 are oriented in pairs outwards at opposite sides of the body 2.

In this configuration, the convex element 16 is able to rotate within the concave element 18, once they have been locked by the pin 20 in one direction of rotation, or alternatively in two directions of rotation.

As best shown in FIGS. 2 and 3, the system 1 comprises a user-operable electronic control unit 36 connected to the actuators 21 and to the lift cylinder 8, and a plurality of position sensors 37.

The sensors 37 may be associated with the actuators 21 for detecting the relative position of the stems 22 and pins 20 and also the underrun protection bar 14 may be connected to the control unit 36 for selective actuation and may be associated with a respective position sensor 37.

The control unit 36 affords independent actuation of the actuators 21 of the support means 15A, 15B, 15C, 15D and the underrun protection bar 14.

The connection of the control unit 36 with the actuators 21 and the underrun protection bar 14 is obtained by means of respective electrical connections 38, which are integrally arranged on the counter frame 5 of the vehicle 3.

This configuration has the advantage of allowing the body 2 to be removed while preventing disconnection of the electrical connections 36, with the possibility of kinematically reversing the position of the convex element 16 and the concave element 18 with respect to the body 2.

The control unit 36 may comprise a user-operable control terminal 39 which is connected to an electronic control board 40. Preferably, the terminal 39 is located within the driver's cab 13.

Conveniently, the terminal 39 may be configured to allow, by selective actuation of one or more controls, the lift cylinder 8 to only move when two of the four pins 2 are in the locked position, according to the tipping side.

Alternatively, when the driver has to tip the body 2 toward the rear side, the control terminal 39 is configured to only allow actuation of the lift cylinder 8 when the rear support means 15C, 15D are in the locked position and when the underrun protection bar 14 is in the rest position.

Furthermore, the control terminal 39 may also have additional features and be configured to prevent actuation of the lift cylinder 8 when the emergency brake of the vehicle 3 is not activated or when the power take-off is not engaged.

The control terminal 39 can also control the opening movement of the hydraulic walls of the body 2 according to the selected tipping side and warns the driver, by means of appropriate light signals, about any system faults. The nature of these faults may be investigated by the driver by actuation of a predetermined sequence of controls.

During operation of the system 1, when the vehicle 3 is moving and the body 2 is in the horizontal position, resting on the four support means 15A, 15B, 15C, 15D, the four pins 20 are in the extended position and fit into the spherical head 17 and the cup-shaped body 26 to lock them together.

When the body 2 has to be tipped to one side of the vehicle 3, once the driver has selected the desired side, he/she actuates the locking control for the pins 20 of that side and simultaneously releases those of the opposite side by means of the terminal 39 provided that all the above described conditions have been met.

Then, he/she will actuate the lift cylinder 8 for lifting the body and the latter will pivot about the pair of support means 15A, 15C that are still in the locked position, with the pins 20 and the stems 22 of the actuators 21 in the extended configuration and acting as a fulcrum.

During such lifting and tipping of the body 2, the pins 20 that are still in the locked position slide in the respective eyelets 33, 34 of the spherical heads 17 in which are they engaged while the pins 20 of the opposite support means 15B, 15D are retracted by the respective actuators 21 into the recesses 11, 12 of the cross members 6, 7 such that they will not hinder removal the corresponding spherical heads 17 from the cup-shaped bodies 26.

For example, in order that the body 2 may be tipped to the left side relative to the viewer, before actuating the lift cylinder 8 the driver will keep the two support means 15A and 15C in the locked state and unlock the two opposite support means 15B and 15D.

As discussed above, the control unit 36 does not allow the lift cylinder 8 to be actuated if the pins 20 selected for the locked position are not fully inserted in their respective spherical heads 17 and cup-shaped bodies 26.

Conversely, if the driver wants to tip the body 2 toward the back of the vehicle 3, he/she will keep the two rear support means 15C, 15D in the locked position and release the front support means 15A, 15B before actuating the lift cylinder 8.

In the latter case, the spherical heads 17 of the two rear support means 15C, 15D will both rotate around their respective pins 20, which are substantially coaxial and engage them with their respective cup-shaped bodies 26 transverse to the axis Y.

The tipping system of this invention is susceptible of a number of changes and variants.

All the details thereof may be replaced by other technically equivalent parts, and the materials may vary depending on different needs.

While the tipping system has been described with particular reference to the accompanying figures, the numerals referred to in the disclosure and claims are only used for the sake of a better intelligibility of the invention and shall not be intended to limit the claimed scope in any manner.

### Industrial Applicability

The present invention may find application in industry, because it can be produced on an industrial scale in factories operating in the field of vehicle safety, particularly for trucks.

## Claims

1. A system (1) for controlled tipping of a dump body (2) of a transport vehicle (3), wherein the vehicle (3) comprises a support frame (4), a counter frame (5) with a pair of parallel cross members (6, 7), a lifting cylinder (8) for lifting the dump body (2) and a locking device (15) for selectively locking the dump body (2), wherein said locking device (15) comprises support means (15A, 15B, 15C, 15D) for supporting the dump body (2), which are designed to be selectively locked and are placed at the ends of said cross members (6, 7), wherein each of said support means (15A, 15B, 15C, 15D) comprises a convex element (16) having a spherical head (17), a concave element (18) having a seat (19) for said spherical head (17), a locking pin (20) for selectively locking said concave element (18) and said convex element (16) to prevent separation thereof, a double-acting actuator (21) for imparting a two-way motion to said pin (20), said actuator (21) being housed in a recess (11, 12) of a respective cross member (6, 7) for actuating a respective pin (20) along a respective transverse direction (X) and cause said convex element (16) and said concave element (18) to be locked together to protect each actuator (21) from possible impacts and damages;
**characterized in that** each convex element (16) is secured to a bottom face (2') of the dump body (2) and each concave element (18) is fixed to said counter frame (5) in alignment with a respective convex element (16), there being provided a user-operable electronic control unit (36) which is connected to said actuators (21) and to said lift cylinder (8) and a plurality of position sensors (37), said control unit (36) and said sensors (37) being connected to said actuators (21) and said cylinder (8) by means of a plurality of electrical connections (38) which are integrally arranged on said counter frame (5).

2. A system as claimed in claim 1, wherein said control unit (36) comprises a user-operable control terminal (39), said terminal (39) being connected to said sensors (37) and configured to allow actuation of said lift cylinder (8) only when two of said pins (20) are in the locked position, according to the tipping side.

3. A system as claimed in claim 2, wherein said vehicle (3) comprises a rear underrun protection bar (14) connected to said control unit (36) and selectively operable to move from a rest position to an operating position.

4. A system as claimed in claim 3, wherein said control terminal (39) is configured to allow the actuation of said lift cylinder (8) when said underrun protection bar (14) is in the rest position.

5. A system as claimed in claim 1, wherein said convex element (16) comprises a securing base (24) for fixation to said bottom face (2') and a connection segment (25) between said base (24) and said spherical head (17).

6. A system as claimed in claim 1, wherein said concave element (18) comprises a mating cup-shaped body (26) that defines said seat (19) for said spherical head (17), said cup-shaped body (26) having a side portion (27) for fixation to the counter frame (5).

7. A system as claimed in claim 1, wherein each actuator (21) comprises a stem (22) which is coaxially and adjustably secured to a respective pin (20) for imparting the two-way motion to the latter.

8. A system as claimed in claim 1, wherein said spherical head (17) comprises two diametrically opposite eyelets (33, 34), which are connected together by a hole (35) for the passage of a respective pin (20).

9. A system as claimed in claim 1, wherein said convex element (16), once locked by said pin (20), is able to rotate in said concave element (18) in one direction of rotation.

10. A system as claimed in claim 1, wherein said convex element (16), is able to rotate in said concave element (18) in two directions of rotation.

11. A method of tipping a dump body (2) of a transport vehicle (3) by means of the tipping system according to any one of the preceding claims, wherein:
when the body (2) is in the horizontal position and is resting on all the support means (15A, 15B, 15C, 15D), the pins (20) are in the extended position and fit into the spherical heads (17) and into the cup-shaped body (26) to lock them together;
when the body (2) has to be tipped to one side of the vehicle (3) the electronic control unit (36) is actuated to select the tipping side;
- the pins (20) and the stems (22) of the actuators (21) of that side are moved in the extended position and inserted into the respective eyelets (33, 34) of the spherical heads (17) in which are they engaged to act as fulcrum and keep the pair of support means (15A, 15C) in the locked position;
- the pins (20) of the opposite support means (15B, 15D) are retracted by the respective actuators (21) into the recesses (11, 12) of the cross members (6, 7) such that they will not hinder removal the corresponding spherical heads (17) from the cup-shaped bodies (26);
- the cylinder (8) is actuated to lift the body (2) and pivot it around said pair of support means (15A, 15C) which are in the locked position;
- the control unit (36) does not allow the lift cylinder (8) to be actuated if the pins (20) selected for the locked position are not fully inserted in their respective spherical heads (17);
when the body (2) is to be tipped toward the back of the vehicle (3):
- the rear support means (15C, 15D) are brought in the locked position and the front support means (15A, 15B) are released;
- the spherical heads (17) of the two rear support means (15C, 15D) are rotated around their respective pins (20), which are substantially coaxial and engage them with their respective cup-shaped bodies (26) transverse to the axis (Y);
- the cylinder (8) is actuated to lift the body (2) and pivot it about said support means (15C, 15D);
- the control terminal (39) allows actuation of the lift cylinder (8) if the rear support means (15C, 15D) are in the locked position and if the underrun protection bar (14) is in the rest position;
wherein said electronic control unit (36) is connected to the actuators (21) and to a plurality of position sensors (37) with a plurality of electrical connections (38) which are integrally arranged on the counter frame (5).

## Patentansprüche

1. System (1) zum gesteuerten Kippen eines Kippaufbaus (2) eines Transportfahrzeugs (3), wobei das Fahrzeug (3) einen Tragrahmen (4), einen Gegenrahmen (5) mit einem Paar paralleler Querträger (6, 7), einen Hubzylinder (8) zum Anheben des Kippkörpers (2) und eine Verriegelungsvorrichtung (15) zum wahlweisen Verriegeln des Kippkörpers (2) aufweist, wobei die Verriegelungsvorrichtung (15) Stützmittel (15A, 15B, 15C, 15D) zum Abstützen des Kippkörpers (2) aufweist, die wahlweise arretierbar ausgebildet sind und an den Enden der Querträger (6, 7) angeordnet sind, wobei jedes der Stützmittel (15A, 15B, 15C, 15D) umfasst: ein konvexes Element (16) mit einem kugelförmigen Kopf (17), ein konkaves Element (18) mit einem Sitz (19) für den kugelförmigen Kopf (17), einen Verriegelungsstift (20) zum selektiven Verriegeln des konkaven Elements (18) und des konvexen Elements (16) um ihre Trennung zu verhindern, einen doppelt wirkenden Aktuator (21) um dem Stift (20) eine Zweiwegebewegung zu verleihen, wobei der Aktuator (21) in einer Aussparung (11, 12) eines jeweiligen Querträgers (6, 7) untergebracht ist, um einen jeweiligen Stift (20) entlang einer jeweiligen Querrichtung (X) zu betätigen und um so zu bewirken, dass das konvexe Element (16) und das konkave Element (18) miteinander verriegelt werden können, um jeden Aktuator (21) vor möglichen Stößen und Beschädigungen zu schützen;
**dadurch gekennzeichnet, dass** jedes konvexe Element (16) an einer Unterseite (2') des Muldenkörpers (2) befestigt ist und jedes konkave Element (18) an dem Gegenrahmen (5) in Ausrichtung mit einem jeweiligen konvexen Element (16) befestigt ist, wobei eine vom Benutzer betätigbare elektronische Steuereinheit (36) vorgesehen ist, die mit den Stellgliedern (21), dem Hubzylinder (8) und mehreren Positionssensoren (37) verbunden ist, wobei die Steuereinheit (36) und die Sensoren (37) mit den Aktuatoren (21) und dem Zylinder (8) über mehrere elektrische Verbindungen (38) verbunden sind, die einstückig an dem Gegenrahmen (5) angeordnet sind.

2. System nach Anspruch 1, bei dem die Steuereinheit (36) ein vom Benutzer bedienbares Steuerendgerät (39) aufweist, das mit den Sensoren (37) verbunden und so konfiguriert ist, dass es die Betätigung des Hubzylinders (8) ermöglicht nur wenn sich zwei der Stifte (20) in der verriegelten Position, entsprechend der Kippseite, befinden.

3. System nach Anspruch 2, wobei das Fahrzeug (3) eine hintere Unterfahrschutzstange (14) aufweist, die mit der Steuereinheit (36) verbunden ist und wahlweise betätigbar ist, um sich von einer Ruheposition in eine Betriebsposition zu bewegen.

4. System nach Anspruch 3, wobei der Steuerendgerät (39) so konfiguriert ist, dass er die Betätigung des Hubzylinders (8) ermöglicht, wenn sich die Unterfahrschutzstange (14) in der Ruheposition befindet.

5. System nach Anspruch 1, bei dem das konvexe Element (16) eine Befestigungsbasis (24) zur Befestigung an der Bodenfläche (2') und ein Verbindungssegment (25) zwischen der Basis (24) und dem kugelförmigen Kopf (17) umfasst.

6. System nach Anspruch 1, wobei das konkave Element (18) einen passenden becherförmigen Körper (26) aufweist, der den Sitz (19) für den kugelförmigen Kopf (17) definiert, wobei der becherförmige Körper (26) einen Seitenteil (27) zur Fixierung am Gegenrahmen (5) aufweist.

7. System nach Anspruch 1, wobei jeder Aktuator (21) einen Schaft (22) aufweist, der koaxial und einstellbar an einem jeweiligen Stift (20) befestigt ist, um dem letzteren die Zweiwege-Bewegung zu verleihen.

8. System nach Anspruch 1, bei dem der kugelförmige Kopf (17) zwei diametral gegenüberliegende Ösen (33, 34) aufweist, die durch ein Loch (35) für den Durchtritt eines jeweiligen Stifts (20) miteinander verbunden sind.

9. System nach Anspruch 1, wobei sich das konvexe Element (16), sobald es durch den Stift (20) verriegelt ist, in dem konkaven Element (18) in einer Drehrichtung drehen kann.

10. System nach Anspruch 1, wobei sich das konvexe Element (16) in dem konkaven Element (18) in zwei Drehrichtungen drehen kann.

11. Verfahren zum Kippen eines Kippaufbaus (2) eines Transportfahrzeugs (3) mittels des Kippsystems nach einem der vorhergehenden Ansprüche, wobei:
wenn sich der Kippaufbau (2) in der horizontalen Position befindet und auf allen Stützmitteln (15A, 15B, 15C, 15D) aufliegt, befinden sich die Stifte (20) in der ausgefahrenen Position und passen in die Kugelköpfe (17) und in den becherförmigen Körper (26), um sie miteinander zu verriegeln;
wenn die (2) zu einer Seite des Fahrzeugs (3) gekippt werden muss, wird die elektronische Steuereinheit (36) betätigt, um die Kippseite auszuwählen;
- die Stifte (20) und die Stiele (22) dieser Seite der Aktuatoren (21) werden in die ausgefahrene Position bewegt und in die entsprechenden Ösen (33, 34) der Kugelköpfe (17) eingeführt, in welcher sie eingerückt sind, um als Drehpunkt zu wirken und das Paar von Stützmitteln (15A, 15C) in der verriegelten Position zu halten;
- die Stifte (20) der gegenüberliegenden Stützmittel (15B, 15D) werden von den jeweiligen Aktuatoren (21) in die Ausnehmungen (11, 12) der Querträger (6, 7) eingezogen, derart, dass sie das Entfernen der entsprechenden kugelförmigen Köpfe (17) von den becherförmigen Körpern (26) nicht behindern;
- der Zylinder (8) wird betätigt, um den Körper (2) anzuheben und um das Paar von Trägermitteln (15A, 15C) zu schwenken, die sich in der verriegelten Position befinden;
- die Steuereinheit (36) erlaubt keine Betätigung des Hubzylinders (8), wenn die für die verriegelte Position ausgewählten Stifte (20) nicht vollständig in ihre jeweiligen Kugelköpfe (17) eingeführt sind;
wenn die Karosserie (2) nach hinten gekippt werden soll (3):
- die hinteren Stützmittel (15C, 15D) werden in die verriegelte Position gebracht und die vorderen Stützmittel (15A, 15B) werden freigegeben;
- die kugelförmigen Köpfe (17) der beiden hinteren Stützmittel (15C, 15D) werden um ihre jeweiligen Stifte (20) gedreht, die im wesentlichen koaxial sind und greifen sie mit ihren jeweiligen becherförmigen Körpern (26) quer zur Achse (Y) ein;
- der Hubzylinder (8) wird betätigt, um den Körper (2) anzuheben und um die Stützeinrichtung (15C, 15D) zu schwenken;
- das Steuerendgerät (39) ermöglicht die Betätigung des Hubzylinders (8), wenn sich die hinteren Stützmittel (15C, 15D) in der verriegelten Position befinden und wenn sich die Unterfahrschutzstange (14) in der Ruheposition befindet;
wobei die elektronische Steuereinheit (36) mit den Stellgliedern (21) und mit mehreren Positionssensoren (37) mit mehreren elektrischen Anschlüssen (38) verbunden ist, die einstückig am Gegenrahmen (5) angeordnet sind.

## Revendications

1. Système (1) de basculement contrôlé d'une benne de décharge (2) d'un véhicule de transport (3), dans lequel le véhicule (3) comprend un châssis de support (4), un contre châssis (5) avec une paire de traverses parallèles (6, 7), un vérin de levage (8) pour soulever la benne de décharge (2) et un dispositif de verrouillage (15) pour verrouiller sélectivement la benne de décharge (2), dans lequel ledit dispositif de verrouillage (15) comprend des moyens de support (15A, 15B, 15C, 15D) pour supporter la benne de décharge (2), qui sont conçus pour être verrouillés sélectivement et sont placés aux extrémités desdites traverses (6, 7), dans lequel chacun desdits moyens de support (15A, 15B, 15C , 15D) comprend un élément convexe (16) ayant une tête sphérique (17), un élément concave (18) ayant un siège (19) pour ladite tête sphérique (17), une goupille de verrouillage (20) pour verrouiller sélectivement ledit élément concave (18) et ledit élément convexe (16) pour empêcher leur séparation, un actionneur à double effet (21) pour communiquer un mouvement bidirectionnel à ladite broche (20), ledit actionneur (21) étant logé dans un évidement (11, 12) de la traverse respective (6, 7) pour actionner une broche respective (20) le long d'une direction transversale respective (X) et provoquer le verrouillage dudit élément convexe (16) et dudit élément concave (18) pour protéger chaque actionneur (21) des impacts et dommages possibles;
**caractérisé en ce que** chaque élément convexe (16) est fixé à une face inférieure (2') de la benne de décharge (2) et chaque élément concave (18) est fixé audit contre-châssis (5) en alignement avec un élément convexe respectif (16), une unité de commande électronique actionnable par l'utilisateur (36) étant connectée auxdits actionneurs (21) et audit vérin de levage (8) et à une pluralité de capteurs de position (37), ladite unité de commande (36) et lesdits capteurs (37) étant connectés auxdits actionneurs (21) et audit vérin de levage (8) au moyen d'une pluralité de connexions électriques (38) qui sont agencées intégralement sur ledit contre-châssis (5).

2. Système selon la revendication 1, dans lequel ladite unité de commande (36) comprend une borne de commande (39) actionnable par l'utilisateur, ladite borne (39) étant connectée auxdits capteurs (37) et configurée pour permettre l'actionnement dudit vérin de levage (8) uniquement lorsque deux desdites broches (20) sont en position verrouillée, selon le côté de basculement.

3. Système selon la revendication 2, dans lequel ledit véhicule (3) comprend une barre de protection arrière anti-encastrement (14) connectée à ladite unité de commande (36) et pouvant être actionnée sélectivement pour passer d'une position de repos à une position de fonctionnement.

4. Système selon la revendication 3, dans lequel ladite borne de commande (39) est configurée pour permettre l'actionnement dudit vérin de levage (8) lorsque ladite barre de protection anti-encastrement (14) est en position de repos.

5. Système selon la revendication 1, dans lequel ledit élément convexe (16) comprend une base de fixation (24) pour une fixation à ladite face inférieure (2') et un segment de connexion (25) entre ladite base (24) et ladite tête sphérique (17).

6. Système selon la revendication 1, dans lequel ledit élément concave (18) comprend un corps en forme de coupelle (26) qui définit ledit siège (19) pour ladite tête sphérique (17), ledit corps en forme de coupelle (26) ayant un partie latérale (27) pour la fixation au contre-châssis (5).

7. Système selon la revendication 1, dans lequel chaque actionneur (21) comprend une tige (22) qui est fixée coaxialement et de manière réglable à une broche respective (20) pour communiquer le mouvement bidirectionnel à cette dernière.

8. Système selon la revendication 1, dans lequel ladite tête sphérique (17) comprend deux oeillets diamétralement opposés (33, 34), qui sont reliés ensemble par un trou (35) pour le passage d'une broche respective (20).

9. Système selon la revendication 1, dans lequel ledit élément convexe (16), une fois verrouillé par ladite broche (20), est capable de tourner dans ledit élément concave (18) dans un sens de rotation.

10. Système selon la revendication 1, dans lequel ledit élément convexe (16) est capable de tourner dans ledit élément concave (18) dans deux directions de rotation.

11. Méthode pour basculer une benne (2) de décharge d'un véhicule de transport (3) au moyen du système de basculement selon l'une quelconque des revendications précédentes, dans lequel:
lorsque le corps (2) est en position horizontale et repose sur tous les moyens de support (15A, 15B, 15C, 15D), les broches (20) sont en position déployée et inserées dans les têtes sphériques (17) et dans le corps en forme de coupelle (26) pour les verrouiller ensemble;
lorsque la benne de décharge (2) doit être basculée d'un côté du véhicule (3), l'unité de commande électronique (36) est actionnée pour sélectionner le côté de basculement;
- les broches (20) et les tiges (22) des actionneurs (21) de ce côté sont déplacées en position déployée et insérées dans les oeillets respectifs (33, 34) des têtes sphériques (17) dans lesquelles elles sont engagées pour agir comme point d'appui et maintenir la paire de moyens de support (15A, 15C) en position verrouillée;
- les broches (20) des moyens de support opposés (15B, 15D) sont rétractées par les actionneurs respectifs (21) dans les évidements (11, 12) des traverses (6, 7) de manière à ne pas gêner le retrait de l'élément correspondant des têtes sphériques (17) provenant des corps en forme de coupelle (26);
- le vérin (8) est actionné pour soulever le corps (2) et le faire pivoter autour de ladite paire de moyens de support (15A, 15C) qui sont en position verrouillée;
- l'unité de commande (36) ne permet pas d'actionner le vérin de levage (8) si les broches (20) sélectionnées pour la position verrouillée ne sont pas complètement insérées dans leurs têtes sphériques respectives (17);
lorsque la benne (2) doit être basculée vers l'arrière du véhicule (3):
- les moyens de support arrière (15C, 15D) sont ramenés en position verrouillée et les moyens de support avant (15A, 15B) sont libérés;
- les têtes sphériques (17) des deux moyens de support arrière (15C, 15D) tournent autour de leurs broches respectives (20), qui sont sensiblement coaxiales et les engagent avec leurs corps respectifs en forme de coupelle (26) transversalement à l'axe (Y);
- le vérin (8) est actionné pour soulever le corps (2) et le faire pivoter autour desdits moyens de support (15C, 15D);
- la borne de commande (39) permet l'actionnement du vérin de levage (8) si les moyens de support arrière (15C, 15D) sont en position verrouillée et si la barre de protection anti-encastrement (14) est en position de repos;
dans lequel ladite unité de commande électronique (36) est connectée aux actionneurs (21) et à une pluralité de capteurs de position (37) avec une pluralité de connexions électriques (38) qui sont agencées intégralement sur le contre-châssis (5).
